Europäisches Patentamt

European Patent Office

Office européen des brevets

(19)

(11) Veröffentlichungsnummer: **0 045 440**
**B1**

# (12) EUROPÄISCHE PATENTSCHRIFT

(45) Veröffentlichungstag der Patentschrift:
**10.04.85**

(21) Anmeldenummer: **81105793.4**

(22) Anmeldetag: **22.07.81**

(51) Int. Cl.⁴: **H 02 M 5/22**

(54) **Vorrichtung zum Erzeugen annähernd trapezförmiger Wechselspannungen an Drehstromausgängen eines Direktumrichters.**

(30) Priorität: **01.08.80 DE 3029319**

(43) Veröffentlichungstag der Anmeldung:
**10.02.82 Patentblatt 82/6**

(45) Bekanntmachung des Hinweises auf die Patenterteilung:
**10.04.85 Patentblatt 85/15**

(84) Benannte Vertragsstaaten:
**BE CH DE FR GB LI SE**

(56) Entgegenhaltungen:
**DE - B - 2 641 294**
**FR - A - 1 490 696**

(73) Patentinhaber: **Siemens Aktiengesellschaft, Berlin und München Wittelsbacherplatz 2, D-8000 München 2 (DE)**

(72) Erfinder: **Salzmann, Theodor, Leimbergerstrasse 29, D-8520 Erlangen (DE)**

## Beschreibung

Die Erfindung betrifft eine Vorrichtung zum Erzeugen annähernd trapezförmiger Wechselspannungen an Drehstromausgängen eines Direktumrichters, wobei jeweils zur Ansteuerung der auf einen Drehstromausgang arbeitenden Umrichterventile eine sinusförmige Eingangsspannung eingegeben ist und von einem Steuersatz die Zündimpulse mit einem zur annähernd trapezförmigen Wechselspannung führenden Steuerwinkel erzeugt werden.

Beim netzgeführten Stromrichter ist die Ausgangsspannung proportional dem Kosinus des Steuerwinkels, der durch die Phasenlage der Zündimpulse zu der Netzwechselspannung bestimmt ist. Es sind Steuersätze bekannt, bei denen der Steuerwinkel linear proportional der Steuerspannung ist. Ein derartiger Steuersatz ist z.B. unter der Typennummer 6PC1001 der Firma Siemens erhältlich und wird z.B. bei Gleichrichtern zur Speisung von Gleichstromantrieben benutzt.

Wird jedoch eine sinusförmige Ausgangsspannung gewünscht, wie sie z.B. zur Speisung von Drehfeldmaschinen vorteilhaft ist, so wird für die Fälle, in denen die Steuerspannung selbst sinusförmig ist, ein Steuersatz benötigt, bei dem ein linearer Zusammenhang zwischen der Steuerspannung und der Ausgangsspannung besteht. In diesen Fällen muss der Steuersatz linearisiert werden, z.B. indem aus der sinusförmigen Eingangsspannung mittels eines Arcuscosinus-Funktionsgebers die Steuerspannung für den oben erwähnten Steuersatz mit linearer Steuerspannung/Steuerwinkel-Kennlinie gebildet oder ein Steuersatz verwendet wird, der selbst eine arcuscosinus-förmige Steuerwinkel/Steuerspannung-Kennlinie aufweist und somit hinsichtlich der Abhängigkeit der Ausgangsspannung von der Steuerspannung linearisiert ist.

Aus der DE-OS 2 415 398 ist bekannt, dass es in manchen Fällen vorteilhafter ist, anstelle einer sinusförmigen Ausgangsspannung eine trapezförmige Ausgangsspannung zu erhalten. Dies ist insbesondere vorteilhaft, wenn mit einem Drehstrom/Drehstrom-Direktumrichter, d.h. mit einem Direktumrichter mit mindestens drei Ausgängen, wobei auf jeden Drehstromausgang ein drehstromgespeister, kreisstromfreier Umrichter arbeitet und die Ausgänge der Umkehrstromrichter in Sternform geschaltet sind, eine entsprechende symmetrische Drehstromlast gespeist wird. In diesen Fällen ist eine erhöhte Leistungsübertragung bei verringerter Aufnahme von Blindleistung des Umrichters möglich, da bei gleichbleibendem Effektivwert der speisenden Netzspannung, der für die Spannungsbeanspruchung der Ventile und die Auslegung des Umrichters entscheidend ist, bei einer trapezförmigen Ausgangsspannung der für die Leistungsübertragung entscheidende Effektivwert der Ausgangsspannungs-Grundschwingung erhöht wird, wenn von einer sinusförmigen Ausgangsspannung auf eine trapezförmige Ausgangsspannung übergegangen wird, wobei dann die mittlere Umrichteraussteuerung höher ist. Die Ausgangsspannung braucht dabei nicht streng trapezförmig sein, vielmehr genügt es, wenn die Ausgangsspannung einen erheblichen Gehalt an Oberschwingungen mit ungeradzahliger, durch drei teilbarer Ordnungszahl und einen geringen Gehalt an Oberschwingungen mit ungeradzahliger, nicht durch drei teilbarer Ordnungszahl enthält. Zur Erzeugung einer derartigen annähernd trapezförmigen Ausgangsspannung ist in der erwähnten Offenlegungsschrift eine Vorrichtung vorgesehen, der zum Ansteuern der auf einen Drehstromausgang arbeitenden Umrichterventile eine sinusförmige Eingangsspannung eingegeben ist, aus der in einer Umformerstufe z.B. durch Aufschalten der entsprechenden Oberschwingungen eine annähernd trapezförmige Steuerspannung für einen Steuersatz geformt wird, wobei der Steuersatz derart linearisiert ist, dass die Ausgangsspannung linear von der Steuerspannung abhängt, d.h. dass die Steuerspannung/Steuerwinkel-Kennlinie annähernd arcuscosinus-förmig ist.

Der Erfindung liegt die Aufgabe zugrunde, bei einem Direktumrichter mit Drehstromausgang eine einfachere Vorrichtung zum Erzeugen annähernd trapezförmiger Wechselspannungen bei Eingabe einer sinusförmigen Eingangsspannung anzugeben.

Gemäss der Erfindung wird dies dadurch erreicht, dass die sinusförmige Eingangsspannung direkt an einen Steuersatz aufgeschaltet ist, dessen Steuerwinkel linear proportional der Steuerspannung ist, z.B. den bereits eingangs erwähnten bekannten Steuersatz des Types 6PC1001.

Es hat sich nämlich überraschenderweise gezeigt, dass von einem derartigen Steuersatz mit linearer Steuerspannung/Steuerwinkel-Kennlinie aus einer sinusförmigen Steuerspannung eine Ausgangsspannung erzeugt wird, die als annähernd trapezförmige Ausgangsspannung in vielen Fällen gut geeignet ist. Dadurch wird die Verwendung einer eigenen Umformerstufe überflüssig und es kann ein einfacherer Steuersatz verwendet werden.

Anhand zweier Figuren und eines Ausführungsbeispiels sei die Erfindung näher erläutert.

Zum Verständnis der Erfindung sei zunächst auf den Zusammenhang zwischen Ausgangsspannung $U_a$, Steuerspannung $U_{st}$ und Steuerwinkel $\alpha$ bei einem netzgeführten Stromrichter hingewiesen:
$$U_a = U_{dio} \cdot \cos \alpha = U_{dio} \cdot \cos f(U_{st}),$$
wobei mit $U_{dio}$ die Ausgangsspannung beim Steuerwinkel $\alpha = 0°$ und mit $f(U_{st})$ die Steuerspannung/Steuerwinkel-Kennlinie $\alpha = f(U_{st})$ bezeichnet ist. Für den hier verwendeten Steuersatz gilt der funktionale Zusammenhang $U_{st} = k \cdot \alpha$, so dass sich bei einer sinusförmigen Steuerspannung mit dem Scheitelwert $U_{sto}$, d.h. $U_{st} = U_{sto} \cdot \sin \omega T$, der Zusammenhang ergibt:
$$U_a = U_{dio} \cdot \cos (U_{sto}/k \cdot \sin \omega T).$$

Die Amplitude $U_{a1}$ der Ausgangsgrundschwingung ist gegenüber der Amplitude $U_{dio}$ der Ausgangsspannung selbst um den Faktor 1,14 überhöht, während gleichzeitig der Oberschwingungsgehalt der 5. und 7. Oberschwingung 1,5% nicht übersteigt.

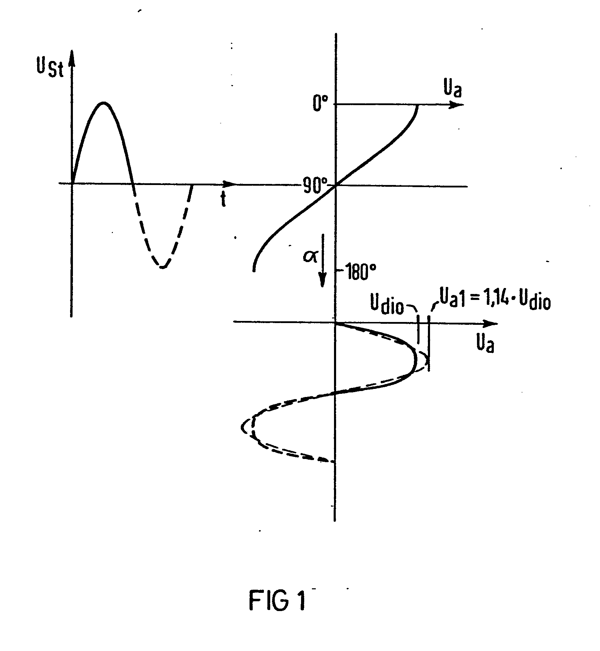

In Fig. 1 sind diese Verhältnisse dargestellt. Aus der sinusförmigen Eingangsspannung (Steuerspannung) entsteht durch Spiegelung an der Steuerkennlinie $U_a = U_{dio} \cdot \cos(U_{st}/k)$, die für einen mit einem derartigen Steuersatz versehenen Stromrichter gilt, der annähernd trapezförmige Verlauf der Ausgangsspannung $U_a$.

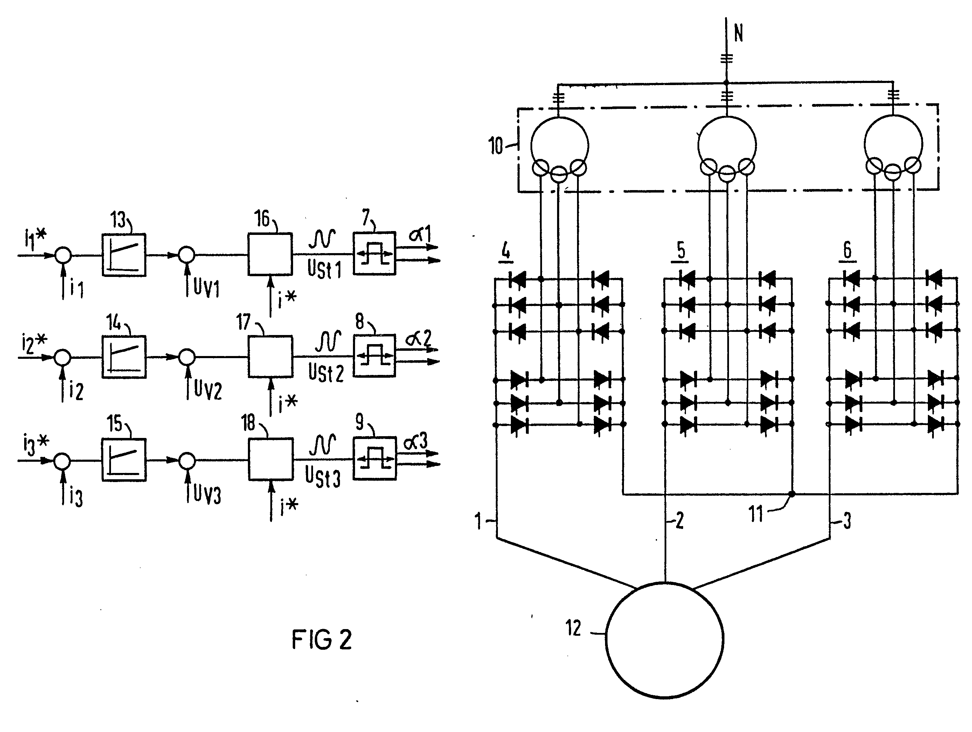

Fig. 2 zeigt einen Direktumrichter, wie er z.B. in der erwähnten deutschen Offenlegungsschrift 2 415 398 verwendet ist, bei dem die jeweils auf einen Drehstromausgang 1, 2, 3 arbeitenden kreisstromfreien Umkehrstromrichter 4, 5, 6 von entsprechenden Vorrichtungen 7, 8, 9 angesteuert werden.

Die Drehstromeingänge der Umkehrstromrichter 4, 5, 6 sind jeweils über getrennte Sekundärwicklungen eines Transformators 10 an ein speisendes Drehstromnetz N angeschlossen. Die einen Ausgänge der Umkehrstromrichter 4, 5, 6 sind an einen gemeinsamen Sternpunkt 11 zusammengeführt, mit den Wechselspannungsausgängen 1, 2, 3 wird eine Drehstromlast 12, vorzugsweise eine Drehfeldmaschine, gespeist. Von einer in diesem Zusammenhang nicht wesentlichen Regeleinrichtung werden die Sollwerte $i^*_1$, $1^*_2$, $1^*_3$ sowie die Istwerte i1, i2, i3 für die in den einzelnen Wechselstromausgängen fliessenden Ströme geliefert und entsprechenden Reglern 13, 14, 15 aufgeschaltet, deren Ausgängen zur Vorsteuerung (z.B. nach DE-OS 2 657 712 und DE-OS 2 657 762) noch Zusatz-Steuerspannungen $U_{v1}$, $U_{v2}$, $U_{v3}$ aufgeschaltet sind. Ferner sind noch Kommandostufen 16, 17, 18 zur Umschaltung der einzelnen Stromrichterbrücken des Umrichters bei Richtungsumkehr des Stromes angedeutet.

Die Vorrichtungen 7, 8, 9 bilden aus sinusförmigen Eingangsspannungen die Zündsignale zum Ansteuern der zugeordneten Umkehrstromrichter 4, 5, 6. Gemäss der Erfindung besteht jede derartige Vorrichtung lediglich aus einem Steuersatz, bei dem der Steuerwinkel $\alpha$ linear proportional zur Steuerspannung ist. Insbesondere entfällt also eine eigene Umformerstufe. Auch sind linearisierende Massnahmen am Steuersatz selbst, die über einen arcuscosinus-artigen Zusammenhang zwischen Steuerspannung und Steuerwinkel zu einer linearen Ausgangsspannung/Steuerspannung-Kennlinie führen, nicht vorgesehen.

**Patentanspruch**

1. Vorrichtung (7, 8, 9) zum Erzeugen annähernd trapezförmiger Wechselspannungen an Drehstromausgängen (1, 2, 3) eines Direktumrichters (4, 5, 6), wobei jeweils zur Ansteuerung der auf einen Drehstromausgang (1) arbeitenden Umrichterventile eine sinusförmige Eingangsspannung ($U_{st1}$) eingegeben ist und von einem Steuersatz (7) die Zündimpulse mit einem zur annähernd trapezförmigen Wechselspannung führenden Steuerwinkel erzeugt werden, dadurch gekennzeichnet, dass die sinusförmige Eingangsspannung ($U_{st1}$) direkt einem an sich bekannten Steuersatz (7) aufgeschaltet ist, dessen Steuerwinkel ($\alpha_1$) linear proportional ($\alpha 1 = k \cdot U_{st1}$) der Steuerspannung ($U_{st1}$) ist (Fig. 2).

**Claim**

1. A device (7, 8, 9) for generating approximately trapezoidal alternating voltages at three-phase outputs (1, 2, 3) of a direct converter (4, 5, 6), where a sinusoidal input voltage $\lambda$ is input in order to drive the converter gates which act upon a three phase output (1), and a control set (7) generates the ignition pulses with a control angle which leads to the approximately trapezoidal alternating voltage, characterised in that the sinusoidal input voltage ($U_{st1}$) is directly connected to a control set (7) which is known per se and whose control angle ($\alpha_1$) is linearly proportional ($\alpha_1 = k \cdot U_{st1}$) to the control voltage ($U_{st1}$) (Fig. 2).

**Revendication**

1. Dispositif (7, 8, 9) servant à produire des tensions alternatives de forme approximativement trapézoïdale, sur des sorties à courant triphasé (1, 2, 3) d'un convertisseur direct (4, 5, 6) et dans lequel une tension d'entrée sinusoïdale ($U_{st1}$) est introduite pour la commande des éléments redresseurs du convertisseur opérant sur une sortie à courant triphasé (1) et les impulsions d'amorçage possédant un angle de commande conduisant à la tension alternative de forme approximativement trapézoïdale sont produites par un ensemble de commande (7), caractérisé par le fait que la tension d'entrée sinusoïdale ($U_{st1}$) est transmise directement à un ensemble de commande (7) connu en soi, dont l'angle de commande ($\alpha_1$) est linéairement proportionnel ($\alpha_1 = k \cdot U_{st1}$) à la tension de commande ($U_{st1}$) (fig. 2).

FIG 1

FIG 2